# EUROPEAN PATENT APPLICATION

(11) **EP 4 517 938 A1**
(43) Date of publication of application: **05.03.2025**
(21) Application number: 22968197.8
(22) Date of filing: 15.12.2022
(51) Int. Cl.: H01M 10/6566, H01M 10/6557, H01M 10/6554

(54) **BATTERY AND ELECTRIC DEVICE**

(71) Applicant: Contemporary Amperex Technology (Hong Kong) Limited, Hong Kong (HK)
(72) Inventor: PU, Yujie, Ningde, Fujian 352100 (CN); LI, Yao, Ningde, Fujian 352100 (CN); CHEN, Xiaobo, Ningde, Fujian 352100 (CN)
(74) Representative: Ran, Handong
(86) International application number: PCT/CN2022/139364
(87) International publication number: WO 2024/124489

(57) **Abstract**

A battery (100) and an electric device, relating to the technical field of batteries. The battery (100) comprises a plurality of battery cells (20) and thermal management components (30); the plurality of battery cells (20) are stacked in a first direction (X1); each battery cell (20) comprises an electrode assembly (21); the thermal management components (30) are arranged opposite to the battery cells (20) in the first direction (X1); and the projection of a main body portion (211) of the electrode assembly (21) in a plane perpendicular to the first direction (X1) at least partially overlaps with the projection of the thermal management component (30) adjacent to the main body portion (211) in the plane perpendicular to the first direction (X1). When thermal runaway occurs to one battery cell (20), the thermal management component (30) can function as an isolation layer, thereby reducing heat transferred from the battery cell (20) under thermal runaway to the adjacent battery cells (20) or other components, and delaying the occurrence of thermal diffusion. Because a thermal management component (30) can have the function of thermal management and function as an isolation layer at the same time, the space utilization rate of the battery can be increased, thereby increasing the energy density of a lithium-ion battery.

## Description

### TECHNICAL FIELD

The present application relates to the technical field of batteries, and in particular, to a battery and an electrical device.

### BACKGROUND

Secondary batteries, such as lithium-ion batteries, sodium-ion batteries, solid-state batteries, and others, have outstanding advantages such as high energy density and good cycling performance, and are widely used in portable electronic devices, electric transportation, electric tools, unmanned aerial vehicles, energy storage devices, and other fields. The energy density of batteries is one of the main concerns of users and one of the main constraints on battery development. Therefore, how to improve the energy density of batteries has become an urgent problem in the battery field.

### SUMMARY OF THE INVENTION

Embodiments of the present application provide a battery and an electrical device to increase the energy density of the battery.

In a first aspect, embodiments of the present application provide a battery including a plurality of battery cells and a thermal management component, where the plurality of battery cells are arranged in a stacked manner along a first direction, each of the battery cells including an electrode assembly that includes a main body portion and tabs protruding from the main body portion along a second direction, with the second direction being perpendicular to the first direction; and the thermal management component is provided opposite to the battery cells along the first direction, the thermal management component being configured to regulate the temperature of the battery cells, where the projection of the main body portion in a plane perpendicular to the first direction and the projection of the thermal management component adjacent to the main body portion in the plane perpendicular to the first direction are at least partially overlapping.

In the above technical solution, the thermal management component is provided opposite to the battery cell in the first direction, so that the thermal management component can regulate the temperature of the battery cell in the case where the battery cell operates normally; and in the event of thermal runaway of the battery cell, the thermal management component can function as a thermal insulation layer to reduce the amount of heat transferred from the battery cell in which the thermal runaway occurs to adjacent battery cells or other components, thereby delaying the occurrence of thermal diffusion. Since the thermal management component can play the roles of thermal management and of the thermal insulation layer at the same time, it is capable of improving the space utilization rate of the battery, which in turn improves the energy density of the battery and can enables lower costs.

In some embodiments of the first aspect of the present application, the area of the projection of the main body portion in the plane perpendicular to the first direction is S₁, and the area of an overlapping portion of the projection of the main body portion in the plane perpendicular to the first direction and the projection of the thermal management component adjacent to the main body portion in the plane perpendicular to the first direction is S₂, which meet: 0.05≤S₂/S₁≤1.

In the above technical solution, if S₂/S₁<0.05, the area of the overlapping portion of the thermal management component and the main body portion is smaller relative to the area of the projection of the main body portion in the plane perpendicular to the first direction, so that the area of the thermal management component that is effective in regulating the temperature of the battery cell is small, resulting in a low efficiency of the thermal management component in regulating the temperature of the battery cell. Therefore, during the charging and discharging process, both the main body portion and the tabs of the electrode assembly have high temperatures, which accelerates the decomposition of the electrolyte and the side reaction of the active materials inside the battery cell, thus shortening the service life of the battery cell. Thus, S₁ and S₂ meet 0.05≤S₂/S₁≤1, so that the thermal management component has a sufficient area for temperature regulation of the battery cell, which enables the thermal management component to have a high efficiency of temperature regulation of the battery cell, thereby contributing to improving the service life of the battery cell.

In some embodiments of the first aspect of the present application, 0.25≤S₂/S₁≤1.

In the above technical solution, the efficiency of thermal management of the thermal management component is improved to a greater extent, so that during the charging and discharging process of the battery, by cooling the battery cell through the thermal management component, the rate of decomposition of the electrolyte and the occurrence of the side reaction of the active materials in the battery cell can be further alleviated, thereby contributing more to improving the service life of the battery cell.

In some embodiments of the first aspect of the present application, along the second direction, at least one end of the main body portion is beyond a corresponding end of the thermal management component; or along the second direction, at least one end of the thermal management component is beyond a corresponding end of the main body portion.

In the above technical solution, if at least one end of the main body portion along the second direction is beyond a corresponding end of the thermal management component, this can enable at least one end of the thermal management component along the second direction not to be beyond the battery cell, thereby reducing the risk of the thermal management component interfering with other structural positions of the battery along the second direction. If at least one end of the thermal management component along the second direction is beyond a corresponding end of the main body portion, a portion of the thermal management component along the second direction is further capable of exchanging heat with a region other than the main body portion, thus increasing the area of heat exchange between the battery cell and the thermal management component, thereby further improving the efficiency of temperature regulation of the battery cell by the thermal management component.

In some embodiments of the first aspect of the present application, along the second direction, two ends of the main body portion are beyond two corresponding ends of the thermal management component, respectively; or along the second direction, two ends of the thermal management component are beyond two corresponding ends of the main body portion, respectively.

In the above technical solution, if two ends of the main body portion along the second direction are beyond two ends of the thermal management component, respectively, this can enable neither of the two ends of the thermal management component along the second direction to be beyond the battery cell, thereby further reducing the risk of the thermal management component interfering with other structural positions of the battery along the second direction, thus reserving sufficient space for the provision of the other structures of the battery cell. If two ends of the thermal management component along the second direction are beyond two corresponding ends of the main body portion, respectively, both portions of the thermal management component that are beyond the main body portion along the second direction are capable of exchanging heat with regions other than the main body portion, thus increasing the area of heat exchange between the battery cell and the thermal management component, thereby further improving the efficiency of temperature regulation of the battery cell by the thermal management component.

In some embodiments of the first aspect of the present application, along the second direction, at least one end of the main body portion is flush with a corresponding end of the thermal management component.

In the above technical solution, at least one end of the main body portion is flush with an end of the thermal management component, which enables the area of the projection of the overlapping portion of the thermal management component with the main body portion in the plane perpendicular to the first direction to be as large as possible, so that the thermal management component has a large effective area of thermal management for the battery cell, thus improving the efficiency of temperature regulation of the battery cell, thereby contributing to improving the service life of the battery cell.

In some embodiments of the first aspect of the present application, along the second direction, two ends of the main body portion are flush with two corresponding ends of the thermal management component, respectively.

In the above technical solution, along the second direction, two ends of the main body portion are flush with two ends of the thermal management component, respectively, so that the thermal management component has a large effective area of thermal management for the battery cell, thus improving the efficiency of temperature regulation of the battery cell, thereby contributing to improving the service life of the battery cell.

In some embodiments of the first aspect of the present application, along the first direction, the main body portion has a first surface facing the thermal management component, the first surface being a surface of the main body portion that has the largest area.

In the above technical solution, the thermal management component is provided opposite to the surface of the main body portion that has the largest area, which can enable the thermal management component to have a larger area for regulating the temperature of the battery cell, thus improving the efficiency of temperature regulation of the battery cell, thereby contributing to improving the service life of the battery cell.

In some embodiments of the first aspect of the present application, the battery cell further includes a shell, electrode terminals, and a pressure relief mechanism, where the shell includes a plurality of wall portions, the plurality of wall portions together defining an accommodation space for accommodating the electrode assembly; the electrode terminals are used for electrically connecting to the tabs; and the pressure relief mechanism is used for relieving pressure inside the battery cell, the pressure relief mechanism and the electrode terminals being separately provided at different ones of the wall portions.

In the above technical solution, the pressure relief mechanism and the electrode terminals are provided in different wall portions, so that when thermal runaway occurs in the battery cell, the distance between the discharged fumes and the high-voltage busbar component can be effectively increased, which effectively reduces the risk of the occurrence of a high-voltage arcing, and also enables each wall portion of the shell to have good structural strength, thereby alleviating the problem of reduced structural strength of the wall portion due to the provision of the pressure relief mechanism and the electrode terminals on the same wall portion of the shell.

In some embodiments of the first aspect of the present application, the pressure relief mechanism and the electrode terminals are provided on two of the wall portions arranged opposite each other along the second direction, respectively; or the pressure relief mechanism and the electrode terminals are provided on two of the wall portions arranged intersecting each other, respectively.

In the above technical solution, the pressure relief mechanism and the electrode terminals are provided on two wall portions arranged opposite to each other along the second direction, respectively, or the pressure relief mechanism and the electrode terminals are provided on two of the wall portions that are arranged in an intersecting manner, respectively, which not only facilitates arrangement but also enables the discharged fumes to be far from the high-voltage busbar component when thermal runaway occurs in the battery cell, thereby effectively avoiding the occurrence of high-voltage arcing.

In some embodiments of the first aspect of the present application, the electrode assembly includes the two tabs of opposite polarities, the two tabs being provided on the same end of the main body portion along the second direction.

In the above technical solution, the two tabs are provided at the same end of the main body portion, then when assembling the battery cell, the two tabs can be separately connected at the same end of the main body portion to other structures, which makes it more convenient to assemble the battery cell, thereby contributing to the improvement of the assembly efficiency.

In some embodiments of the first aspect of the present application, the electrode assembly includes the two tabs of opposite polarities, the two tabs being provided on two opposite ends of the main body portion along the second direction, respectively.

In the above technical solution, the two tabs are provided at two opposite ends of the main body portion, respectively, which can reduce the risk of short-circuiting of the battery cell, thereby reducing the risk of the two tabs interfering with each other when they are separately connected to other structures.

In some embodiments of the first aspect of the present application, the projection of the tabs in the plane perpendicular to the first direction and the projection of the thermal management component adjacent to the main body portion in the plane perpendicular to the first direction are at least partially overlapping.

In the above technical solution, since the temperature of the tabs is high during the charging and discharging process of the battery cell, and the projection of the tabs in the plane perpendicular to the first direction and the projection of the thermal management component adjacent to the main body portion in the plane perpendicular to the first direction are at least partially overlapping, the thermal management component is capable of exchanging heat with the tabs to carry away the heat at the tabs, thereby reducing the risk of thermal runaway of the battery cell.

In some embodiments of the first aspect of the present application, the thermal management component is provided between at least two adjacent ones of the battery cells along the first direction.

In the above technical solution, two battery cells adjacent to each other along the first direction are provided with a thermal management component, then the thermal management component is capable of exchanging heat with the battery cells on both sides at the same time, which enables improvement of the efficiency of heat exchange, thereby improving the capability of temperature regulation of the battery cells by the thermal management component. A thermal management component is provided between two adjacent battery cells, so that in the event that thermal runaway occurs in one of them, the thermal management component can act as a thermal insulation layer to reduce the amount of heat transferred from the battery cell in which thermal runaway occurs to the adjacent battery cells, thereby delaying the occurrence of thermal diffusion. Since the thermal management component can play the roles of thermal management and of the thermal insulation layer at the same time, it is capable of improving the space utilization rate of the battery, which in turn improves the energy density of the battery.

In some embodiments of the first aspect of the present application, there is a plurality of said thermal management components provided, the plurality of said thermal management components being provided spaced apart along the first direction, with at least one said battery cell being provided between two adjacent ones of the thermal management components.

In the above technical solution, a plurality of thermal management components work together to regulate the temperature of the battery cells, which enables improvement of the efficiency of temperature regulation, so as to enable normal operation of the battery cells and reduce the risk of thermal runaway of the battery cells. At least one battery cell is provided between two adjacent thermal management components, which enables a delay in the occurrence of thermal diffusion from two sides of the battery cell along the first direction.

In some embodiments of the first aspect of the present application, the battery cells are arranged alternately with the thermal management components along the first direction.

In the above technical solution, the battery cells are arranged alternately with the thermal management components along the first direction, so that for each battery cell, there is at least one thermal management component provided opposite thereto, and the temperature thereof is regulated by this thermal management component, which is conducive to reducing the temperature difference between the various battery cells in the battery, so as to provide a more even distribution of the temperature inside the battery, thereby contributing to the realization of normal charging and discharging of the battery.

In a second aspect, embodiments of the present application provide an electrical device, including a battery provided in any one of the embodiments of the first aspect.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 shows a structural schematic diagram of a vehicle provided in some embodiments of the present application;
FIG. 2 shows an exploded view of a battery provided in some embodiments of the present application;
FIG. 3 shows a cross-sectional view of a battery provided in some embodiments of the present application;
FIG. 4 shows a cross-sectional view of a battery cell provided in some embodiments of the present application;
FIG. 5 shows an exploded view of a battery cell provided in some embodiments of the present application;
FIG. 6 shows a cross-sectional view of a battery provided in some more embodiments of the present application;
FIG. 7 shows a cross-sectional view of a battery provided in yet some more embodiments of the present application;
FIG. 8 shows a cross-sectional view of a battery provided in some other embodiments of the present application;
FIG. 9 shows a cross-sectional view of a battery provided in yet some other embodiments of the present application;
FIG. 10 shows a cross-sectional view of a battery provided in yet some other embodiments of the present application;
FIG. 11 shows a three-dimensional view of an electrode assembly provided in some embodiments of the present application;
FIG. 12 shows a view of the electrode assembly in FIG. 11 along a first direction;
FIG. 13 shows a cross-sectional view of a battery cell provided in some other embodiments of the present application;
FIG. 14 shows a cross-sectional view of a battery including the battery cell of FIG. 13;
FIG. 15 shows a cross-sectional view of a battery provided in some further embodiments of the present application;
FIG. 16 shows a cross-sectional view of a battery cell provided in some more embodiments of the present application;
FIG. 17 shows a cross-sectional view of a battery including the battery cell of FIG. 16;
FIG. 18 shows a structural schematic diagram of a battery provided in some further embodiments of the present application;
FIG. 19 shows a cross-sectional view of a battery cell provided in some further embodiments of the present application;
FIG. 20 shows a cross-sectional view of a battery including the battery cell of FIG. 19;
FIG. 21 shows a cross-sectional view of a battery provided in yet some other embodiments of the present application;
FIG. 22 shows a cross-sectional view of a battery provided in yet some more embodiments of the present application;
FIG. 23 shows a cross-sectional view of a battery provided in yet some further embodiments of the present application;
FIG. 24 shows a cross-sectional view of a battery provided in still some further embodiments of the present application;
FIG. 25 shows a cross-sectional view of a battery provided in some further embodiments of the present application;
FIG. 26 shows a cross-sectional view of a battery provided in yet some further embodiments of the present application;
FIG. 27 shows a cross-sectional view of a battery provided in yet some other embodiments of the present application;
FIG. 28 shows a cross-sectional view of a battery provided in yet some further embodiments of the present application; and
FIG. 29 shows a cross-sectional view of a battery provided in yet some more embodiments of the present application.

Reference numerals: 1000 - vehicle; 100 - battery; 10 - box body; 11 - first portion; 12 - second portion; 20 - battery cell; 21 - electrode assembly; 211 - main body portion; 2111 - third end; 2112 - fourth end; 2113 - first surface; 2114 - flat portion; 2115 - bent portion; 212 - tab; 22 - shell; 221 - case; 2211 - opening; 2212 - bottom wall; 2213 - side wall; 222 - end cover; 23 - electrode terminal; 24 - current collecting member; 25 - pressure relief mechanism; 30 - thermal management component; 31 - first end; 32 - second end; 200 - controller; 300 - motor; X1 - first direction; Y1 - second direction; Z1 - third direction; X2 - thickness direction of thermal management component; Y2 - width direction of thermal management component; Z2 - length direction of thermal management component.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are a part of the examples of the present application rather than all the embodiments. The assembly of the examples of the present application generally described and illustrated in the drawings herein can be arranged and designed in a variety of different configurations.

Accordingly, the following detailed description of the embodiments of the present application provided in the accompanying drawings is not intended to limit the scope of the present application for which protection is claimed, but merely to indicate selected embodiments of the present application. All the other embodiments obtained by a person of ordinary skill in the art based on the embodiments of the present application without any creative effort shall fall within the scope of protection of the present application.

It should be noted that, without conflict, embodiments in the present application and features in the embodiments may be combined together.

It should be noted that similar symbols and letters denote similar items in the following accompanying drawings, so that once an item is defined in one of the accompanying drawings, it needs not to be further defined and explained in the subsequent drawings.

In the description of the embodiments of the present application, it should be noted that the orientation or positional relationship is indicated as being based on the orientation or positional relationship shown in the accompanying drawings, or the orientation or positional relationship in which the product of the present application is customarily placed in use, or as customarily understood by those skilled in the art, solely for the purpose of facilitating the description of the present application and simplifying the description, but do not indicate or imply that the apparatuses or elements referred to must have a particular orientation, be constructed and operate in a particular orientation, and therefore cannot be construed as a limitation of the present application. In addition, the terms "first", "second" and "third" are only used to distinguish the description, and cannot be construed as indicating or implying relative importance.

At present, from the perspective of the development of the market situation, power batteries are increasingly more widely used. Power batteries are not only applied in energy storage power source systems such as water, fire, wind, and solar power stations, but also widely applied in electric transport tools, such as electric bicycles, electric motorcycles, and electric vehicles, as well as many fields, such as military equipment and aerospace. With the continuous expansion of the application field of the power batteries, the market demand is also constantly expanding.

The battery mentioned in the embodiments of the present application refers to a single physical module including one or more battery cells to provide a higher voltage and capacity. For example, the battery mentioned in the present application may include a battery module or a battery pack, etc. The battery generally may also include a box body for encapsulating one or more battery cells. The box body can prevent liquid or other foreign matters from affecting charging or discharging of the battery cells.

In the charging and discharging process of the battery, the electrode assembly of the battery cell generates heat due to the chemical reaction, so it is necessary to reduce the temperature of the battery cell in a timely manner to ensure the normal operation of the battery cell and reduce the occurrence of the problem of thermal runaway in the battery cell; and in the case where the ambient temperature is very low, it is necessary to warm up the battery cell to ensure that the battery can work normally. Thus, the battery may further include a thermal management component for regulating the temperature of the battery cell. In addition, to prevent thermal runaway of the battery cells which in turn causes thermal diffusion, the battery may further include a thermal insulation layer provided between neighboring battery cells. In the related art, the battery will be provided with both the thermal management component and the thermal insulation layer, and the thermal management component and the thermal insulation layer are provided at different positions, which will lead to a low space utilization rate of the battery, and thus reduce the energy density of the battery.

Based on the above considerations, in order to alleviate the problem of low energy density of the battery due to the provision of the thermal insulation layer, after in-depth research, the inventors have designed a battery including a plurality of battery cells and a thermal management component, where the plurality of battery cells are arranged in a stacked manner along a first direction, each of the battery cells including an electrode assembly that includes a main body portion and tabs protruding from the main body portion along a second direction, with the second direction being perpendicular to the first direction; and the thermal management component is provided opposite to the battery cells along the first direction, where the projection of the main body portion in a plane perpendicular to the first direction and the projection of the thermal management component adjacent to the main body portion in the plane perpendicular to the first direction are at least partially overlapping.

The thermal management component is provided opposite to the battery cell in the first direction, so that the thermal management component can regulate the temperature of the battery cell in the case where the battery cell operates normally; and in the event of thermal runaway of the battery cell, the thermal management component can function as a thermal insulation layer to reduce the amount of heat transferred from the battery cell in which the thermal runaway occurs to adjacent battery cells or other components, thereby delaying the occurrence of thermal diffusion. Since the thermal management component can play the roles of thermal management and of the thermal insulation layer at the same time, it is capable of improving the space utilization rate of the battery, which in turn improves the energy density of the battery and can enables lower costs.

Embodiments of the present application provide an electrical device that uses a battery as a power supply, and the electrical device may be, but is not limited to, a mobile phone, a tablet, a laptop, an electric toy, an electric tool, a battery vehicle, an electric vehicle, a ship, a spacecraft, and so on. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, as well as an energy storage system, an energy storage power station, and the like.

For the convenience of description, the following embodiments are illustrated with an example in which the electrical device according to an embodiment of the present application is a vehicle 1000.

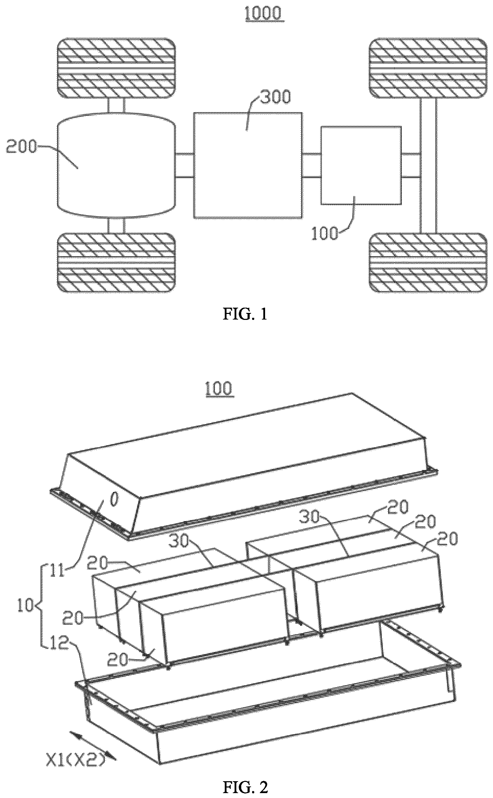

Referring to FIG. 1. FIG. 1 shows a structural schematic diagram of a vehicle 1000 provided in some embodiments of the present application. The vehicle 1000 may be a fuel vehicle, a gas vehicle, or a new energy vehicle, and the new energy vehicle may be an all-electric vehicle, a hybrid electric vehicle, an extended range electric vehicle, or the like. The vehicle 1000 is internally provided with a battery 100, and the battery 100 may be arranged at a bottom or head or tail of the vehicle 1000. The battery 100 may be used to supply power to the vehicle 1000. For example, the battery 100 may be used as an operating power supply of the vehicle 1000. The vehicle 1000 may further include a controller 200 and a motor 300. The controller 200 is used to control the battery 100 to power the motor 300, for example, to meet working power demands during starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to FIG. 2. FIG. 2 is an exploded view of a battery 100 according to some embodiments of the present application. The battery 100 includes a box body 10 and battery cells 20, the battery cells 20 being accommodated within the box body 10. where the box body 10 is used to provide an accommodation space for the battery cell 20, and the box body 10 can be of various structures. In some embodiments, the box body 10 may comprise a first portion 11 and a second portion 12, the first portion 11 and the second portion 12 being capped with each other, and the first portion 11 and the second portion 12 together defining the accommodation space for accommodating the battery cell body 20. The second portion 12 may be of a hollow structure with an opening at one end to form an accommodation portion for accommodating the battery cells 20, and the first portion 11 may be of a plate-like structure, where the first portion 11 is capped on the opening side of the second portion 12 so that the first portion 11 and the second portion 12 together define the accommodation space; or the first portion 11 and the second portion 12 may each be of a hollow structure with an opening at one end to form an accommodation portion for accommodating the battery cells 20, where the opening side of the first portion 11 is capped on the opening side of the second portion 12. Of course, the box body 10 formed by the first portion 11 and the second portion 12 may be of a variety of shapes, such as a cylinder, a rectangular solid, or the like.

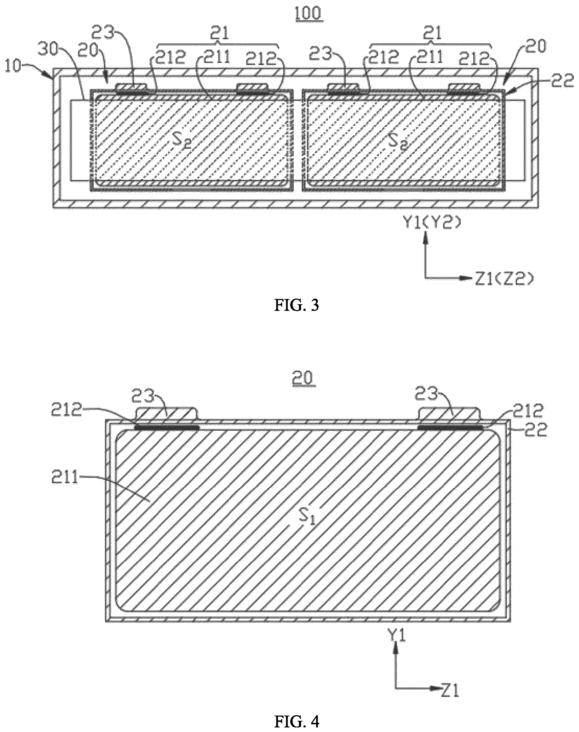

In the battery 100, there may be a plurality of battery cells 20, and the plurality of battery cells 20 may be connected in series or parallel or in a parallel-series connection, and the parallel-series connection means that the plurality of battery cells 20 are connected in both series and parallel. The plurality of battery cells 20 can be directly connected together in series or in parallel or in mixed connection, and then the whole composed of the plurality of battery cells 20 can be accommodated in the box body 10; and of course, the battery 100 may also be in the form of a battery module first formed by the plurality of battery cells 20 being connected in series or in parallel or in mixed connection, then multiple battery modules can be connected in series or in parallel or in mixed connection to form a whole, and accommodated in the box body 10. The battery 100 may further include other structures, for example, the battery 100 may further include a busbar component (not shown in the figure), the busbar component being generally welded and fixed to the electrode terminals 23 (shown in FIG. 3) of the battery cell 20 for realizing electrical connections between the plurality of battery cells 20.

As shown in FIGS. 2, 3, and 4, in some embodiments, the battery 100 includes a plurality of battery cells 20 and a thermal management component 30. The plurality of battery cells 20 are arranged in a stacked manner along a first direction X1, where each of the battery cells 20 includes an electrode assembly 21, the electrode assembly 21 including a main body portion 211 and tabs 212 protruding from the main body portion 211 along a second direction Y1, the second direction Y1 being perpendicular to the first direction X1; and the thermal management component 30 is provided opposite to the battery cells 20 along the first direction X1, the thermal management component 30 being configured to regulate the temperature of the battery cells 20, where the projection of the main body portion 211 in a plane perpendicular to the first direction X1 and the projection of the thermal management component 30 adjacent to the main body portion 211 in the plane perpendicular to the first direction X1 are at least partially overlapping.

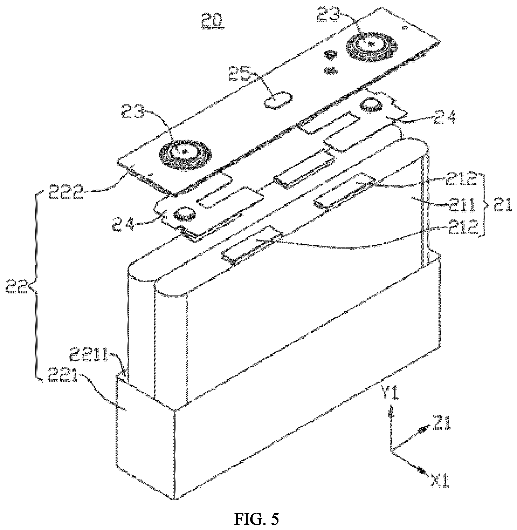

As shown in FIGS. 4 and 5, the battery cell 20 is the smallest unit that makes up the battery 100. The battery cell 20 further includes a shell 22 and other functional components. The shell 22 includes a case 221 and an end cover 222, where the end cover 222 is a component that covers an opening 2211 of the case 221 to isolate the internal environment of the battery cell 20 from the external environment. Without limitation, the shape of the end cover 222 can be adapted to the shape of the case 221 to fit the case 221. Optionally, the end cover 222 can be made of a material (such as aluminum alloy) with a certain hardness and strength, so that the end cover 222 is less likely to deform when subjected to extrusion and collision, which allows the battery cell 20 to have a higher structural strength. The end cover 222 can be provided with functional components such as electrode terminals 23. The electrode terminals 23 can be used for electrical connections with the electrode assembly 21 for use in outputting or inputting electrical energy from or to the battery cell 20. In some embodiments, the end cover 222 may also be provided with a pressure relief mechanism 25 for releasing the internal pressure when the internal pressure or temperature of the battery cell 20 reaches a threshold. The end cover 222 may also be made of a variety of materials, such as copper, iron, aluminum, stainless steel, aluminum alloy, plastic, etc., and the embodiments of the present application are not particularly limited in this regard. In some embodiments, an insulating member (not shown in the drawings) may also be provided on the inner side of the end cover 222, and the insulating member can be used to insulate and isolate the electrical connection components inside the case 221 from the end cover 222 to reduce the risk of short circuit. As an example, the insulating member may be plastic, rubber, etc.

The case 221 is an assembly for fitting the end cover 222 to form the internal environment of the battery cell 20, where the formed internal environment can be used to accommodate the electrode assembly 21, electrolyte solution, and other components. The case 221 and the end cover 222 may be separate components, and an opening 2211 may be provided on the case 221, and the internal environment of the battery cell 20 may be formed by making the end cover 222 cover the opening 2211 at the opening 2211. Without limitation, it is also possible to make the end cover 222 and the case 221 integrated. Specifically, the end cover 222 and the case 221 may first form a common connecting face before the other components enter the case, and then the end cover 222 is made to cover the case 221 when the interior of the case 221 needs to be encapsulated. The case 221 may be of various shapes and various sizes, for example, rectangular solid shape, cylindrical shape, hexagonal shape, etc. Specifically, the shape of the case 221 may be determined based on the specific shape and size of the electrode assembly 21. The case 221 may be made of various materials, such as copper, iron, aluminum, stainless steel, aluminum alloy, and plastic, which is not particularly limited in the embodiments of the present application.

The electrode assembly 21 is a component in which an electrochemical reaction occurs in the battery cell 20. The case 221 may contain one or more electrode assemblies 21 inside. The electrode assembly 21 is formed primarily by the winding or laminated placement of a positive electrode plate and a negative electrode plate, and is usually provided with a separator between the positive electrode plate and the negative electrode plate. The portions of the positive electrode plate and the negative electrode plate having an active material form a main body portion 211 of the electrode assembly 21, and the portions of the positive electrode plate and the negative electrode plate not having an active material each form a tab 212. The positive tab and the negative tab may be co-located at one end of the main body portion 211 or be located at two ends of the main body portion 211, respectively. During charging and discharging of the battery 100, the positive electrode active material and the negative electrode active material react with the electrolyte solution, and the tabs 212 are connected to the electrode terminals 23 to form a current loop. The tabs 212 may be electrically connected to the electrode terminals 23 via a current collecting member 24 (shown in FIG. 5).

The thermal management component 30 may be used to lower the temperature of the battery cell 20 or may be used to raise the temperature of the battery cell 20. The thermal management component 30 may be of a plate-like structure formed internally with an accommodation cavity that accommodates a heat exchange medium, and the heat exchange medium may be water, air, a mixture of water and glycol, a refrigerant, a phase change material, or the like, and the heat exchange medium may be flowing in a cyclic manner. The thermal management component 30 may also be referred to as a water-cooled plate, a liquid-cooled plate, a heat-exchange plate, a temperature-regulating plate, or the like.

The thermal management component 30 may be connected to a surface of the shell 22 of the battery cell 20 opposite to it. For example, the thermal management component 30 is in a bonding connection to the surface of the shell 22 of the battery cell 20, or the thermal management component 30 is in a welded connection to the shell 22 of the battery cell 20. The thermal management component 30 may also be in contact with the surface of the shell 22 of the battery cell 20, or a thermally conductive component such as a thermally conductive pad may be provided between the thermal management component 30 and the surface of the shell 22 of the battery cell 20, which is not limited in the present application.

In some embodiments of the present application, the thermal management component 30 is of a plate-like structure, and the first direction X1 is parallel to the thickness direction X2 of the thermal management component. The second direction Y1 may be parallel to the width direction Y2 of the thermal management component, or may be parallel to the length direction Z2 of the thermal management component. Among them, any two of the thickness direction X2 of the thermal management component, the length direction Z2 of the thermal management component, and the width direction Y2 of the thermal management component are perpendicular to each other.

The projection of the main body portion 211 in a plane perpendicular to the first direction X1 and the projection of the thermal management component 30 adjacent to the main body portion 211 in the plane perpendicular to the first direction X1 may be partially overlapping or completely overlapping.

The thermal management component 30 is provided opposite to the battery cell 20 in the first direction X1, so that the thermal management component 30 can regulate the temperature of the battery cell 20 in the case where the battery cell 20 operates normally; and in the event of thermal runaway of the battery cell 20, the thermal management component 30 can function as a thermal insulation layer to reduce the amount of heat transferred from the battery cell 20 in which thermal runaway occurs to adjacent battery cells 20 or other components (which include, but are not limited to, the box wall of the box body 10, the electrical components within the box body 10, the partition beams within the box body 10, or the like), thereby delaying the occurrence of thermal diffusion. Since the thermal management component 30 can play the roles of thermal management and of the thermal insulation layer at the same time, it is capable of improving the space utilization rate of the battery 100, which in turn improves the energy density of the battery 100 and can enables lower costs.

As shown in FIGS. 3 and 4, in some embodiments, the area of the projection of the main body portion 211 in the plane perpendicular to the first direction X1 is S₁, and the area of an overlapping portion of the projection of the main body portion 211 in the plane perpendicular to the first direction X1 and the projection of the thermal management component 30 adjacent to the main body portion 211 in the plane perpendicular to the first direction X1 is S₂, which meet: 0.05≤S₂/S₁≤1.

S₂/S₁ may be 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, or the like.

The inventors selected 21 identical battery cells 20 and thermal management components 30, each of the battery cells 20 and thermal management components 30 forming a group, numbered 1 to 21, with each group having a different S₂/S₁, as shown in Table 1 below. Under the same experimental conditions, the 21 battery cells 20 were separately charged at a charging rate of 2C, and at the same time, a coolant with an initial temperature of 23 °C was fed into the interior of the thermal management components 30 to cool down the battery cells 20. The charging and cooling were carried out simultaneously and continued for 10 min and then stopped at the same time, and then after each battery cell 20 was left to rest for 5 min, the maximum temperature of the main body portion 211 and the maximum temperature of the tabs 212 of the electrode assembly 21 of each of the battery cell 20 were separately measured. The experimental results are shown in Table 1.

**Table 1**

| Serial number | S₂/S₁ | Maximum temperature of main body portion/°C | Maximum temperature of tabs/°C |
|---|---|---|---|
| 1 | 0.025 | 63 | 105 |
| 2 | 0.05 | 57 | 90 |
| 3 | 0.1 | 55 | 83 |
| 4 | 0.15 | 54 | 78 |
| 5 | 0.2 | 52 | 76 |
| 6 | 0.25 | 50 | 73 |
| 7 | 0.3 | 48 | 71 |
| 8 | 0.35 | 46 | 69 |
| 9 | 0.4 | 44 | 68 |
| 10 | 0.45 | 42 | 67 |
| 11 | 0.5 | 40 | 66 |
| 12 | 0.55 | 38 | 66 |
| 13 | 0.6 | 37 | 65 |
| 14 | 0.65 | 36 | 65 |
| 15 | 0.7 | 35 | 65 |
| 16 | 0.75 | 34 | 64 |
| 17 | 0.8 | 33 | 64 |
| 18 | 0.85 | 32 | 64 |
| 19 | 0.9 | 31 | 63 |
| 20 | 0.95 | 31 | 63 |
| 21 | 1 | 30 | 62 |

As shown in Table 1, when S₂/S₁ is 0.025, the maximum temperature of the main body portion 211 is 63 °C and the maximum temperature of the tabs 212 is 105 °C. However, when the maximum temperature of the main body portion 211 is more than 60 °C and the maximum temperature of the tabs is more than 90 °C, the decomposition of the electrolyte and the side reaction of the active materials will be accelerated, which shortens the service life of the battery cell 20. Therefore, when 0.05≤S₂/S₁≤1, cooling down the battery cell 20 by the thermal management component 30 enables the maximum temperature of the main body portion 211 to be no more than 60 °C and the maximum temperature of the tabs 212 to be no more than 90 °C, which is conducive to improving the service life of the battery cell 20.

In some embodiments, 0.25≤S₂/S₁≤1.

S₂/S₁ may also be 0.28, 0.33, 0.38, 0.43, 0.48, 0.53, 0.58, 0.63, 0.68, 0.73, 0.78, 0.83, 0.88, 0.93, 0.98, or the like.

Please continue to refer to Table 1. When 0.25≤S₂/S₁≤1, the maximum temperature of the main body portion 211 does not exceed 50 °C. This can further alleviate the rate of decomposition of the electrolyte and the occurrence of side reactions of the active materials, which is more conducive to improving the service life of the battery cell 20.

Further, 0.5≤S₂/S₁≤1.

Please continue to refer to Table 1. When 0.5≤S₂/S₁≤1, the maximum temperature of the main body portion 211 does not exceed 40 °C. This can even further alleviate the rate of decomposition of the electrolyte and the occurrence of side reactions of the active materials, which is more conducive to improving the service life of the battery cell 20.

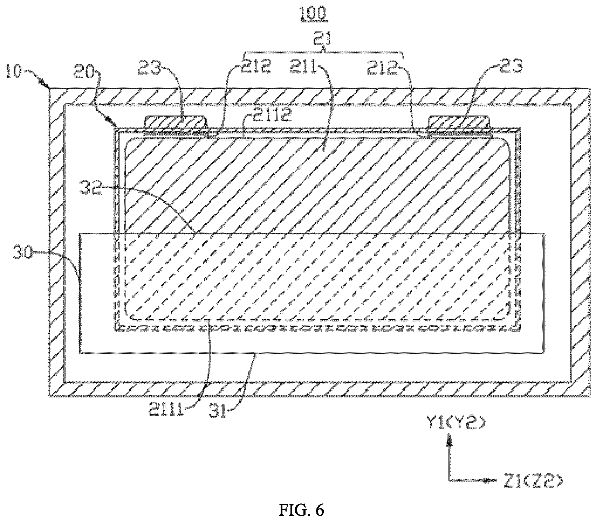

As shown in FIGS. 6, 7, and 8, at least one end of the main body portion 211 is beyond a corresponding end of the thermal management component 30 along the second direction Y1; or at least one end of the thermal management component 30 is beyond a corresponding end of the main body portion 211 along the second direction Y1.

At least one end of the main body portion 211 being beyond a corresponding end of the thermal management component 30 along the second direction Y1 can be understood to mean that at least one end of the main body portion 211 along the second direction Y1 is located outside the projection of the thermal management component 30 in the plane perpendicular to the first direction X1.

Therefore, if at least one end of the main body portion 211 along the second direction Y1 is beyond an end of the thermal management component 30, this can enable at least one end of the thermal management component 30 along the second direction Y1 not to be beyond the battery cell 20, thereby reducing the risk of the thermal management component 30 interfering with other structural positions of the battery 100 along the second direction Y1.

Among other things, along the second direction Y1, the main body portion 211 may have only one end beyond one end of the thermal management component 30, which means that only one end of the main body portion 211 along the second direction Y1 is located outside of the projection of the thermal management component 30 in the plane perpendicular to the first direction X1.

As shown in FIG. 6, in an embodiment in which the second direction Y1 is parallel to the width direction Y2 of the thermal management component, along the second direction Y1, the main body portion 211 and the thermal management component 30 are provided in a staggered and partially overlapping manner such that the projection of the main body portion 211 in the plane perpendicular to the first direction X1 and the projection of the thermal management component 30 in the plane perpendicular to the first direction X1 are partially overlapping, and one end of the thermal management component 30 disposed in the second direction Y1 is beyond one end of the main body portion 211 disposed in the second direction Y1, and the other end of the main body portion 211 disposed in the second direction Y1 is beyond the other end of the thermal management component 30 disposed in the second direction Y1. As shown in FIG. 6, along the second direction Y1, the thermal management component 30 has a first end 31 and a second end 32 opposite to each other, and the main body portion 211 has a third end 2111 and a fourth end 2112 opposite to each other, where the first end 31 corresponds to the third end 2111 and the first end 31 is beyond the third end 2111, which means that the first end 31 is located outside the projection of the main body portion 211 in the plane perpendicular to the first direction X1, and the fourth end 2112 corresponds to the second end 32 and the fourth end 2112 is beyond the second end 32, which means that the fourth end 2112 is located outside the projection of the thermal management component 30 in the plane perpendicular to the first direction X1. The dashed portion of the main body portion 211 in FIG. 6 indicates a region of the main body portion 211 that is obscured by the thermal management component 30. In other words, the dashed portion of the main body portion 211 indicates a portion of the thermal management component 30 that overlaps the main body portion 211. In this embodiment, along the second direction Y1, the main body portion 211 has only one end beyond one end of the thermal management component 30.

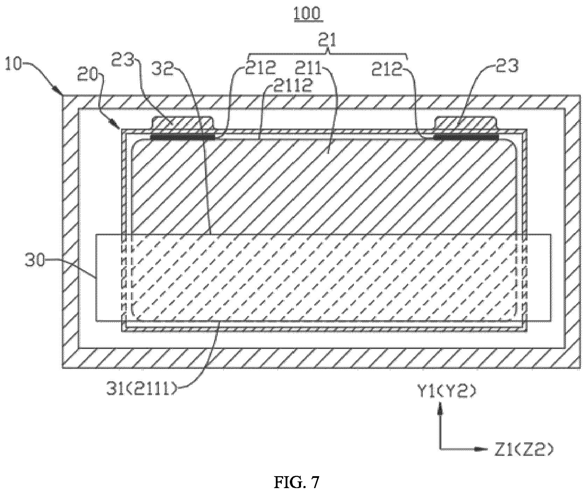

As shown in FIG. 7, in some other embodiments, the first end 31 is flush with the third end 2111 and the fourth end 2112 is beyond the second end 32 along the second direction Y1, which can be understood to mean that along the second direction Y1, the main body portion 211 may have only one end beyond the corresponding end of the thermal management component 30.

At least one end of the thermal management component 30 being beyond a corresponding end of the main body portion 211 along the second direction Y1 can be understood to mean that at least one end of the thermal management component 30 along the second direction Y1 is located outside the projection of the main body portion 211 in the plane perpendicular to the first direction X1. Among other things, along the second direction Y1, the thermal management component 30 may have only one end beyond the corresponding end of the main body portion 211. As shown in FIG. 6, the first end 31 of the thermal management component 30 is beyond the third end 2111 of the main body portion 211, and the fourth end 2112 of the main body portion 211 is beyond the second end 32 of the thermal management component 30.

If at least one end of the thermal management component 30 along the second direction Y1 is beyond a corresponding end of the main body portion 211, a portion of the thermal management component 30 along the second direction Y1 is further capable of exchanging heat with a region other than the main body portion 211, thus increasing the area of heat exchange between the battery cell 20 and the thermal management component 30, thereby further improving the efficiency of temperature regulation of the battery cell 20 by the thermal management component 30.

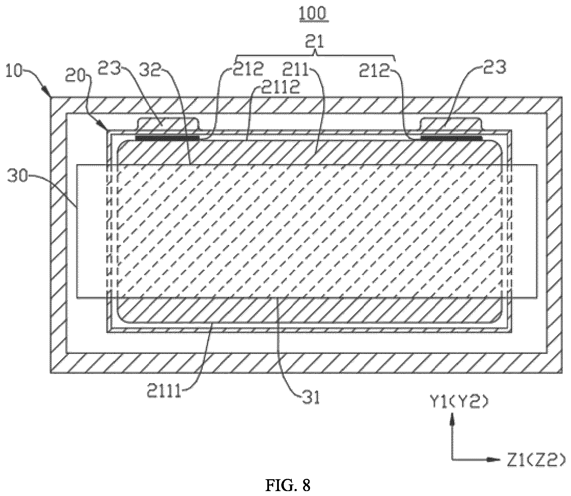

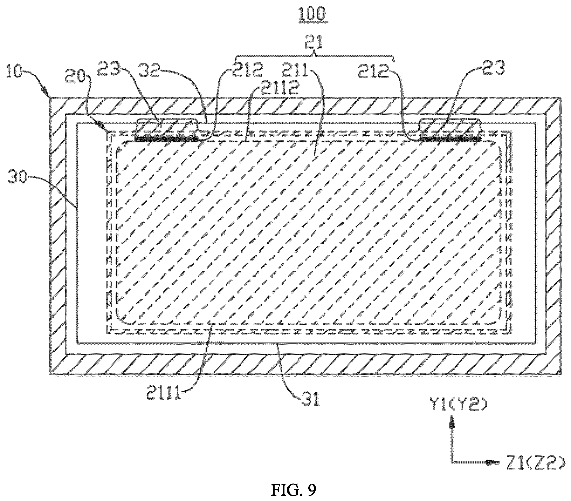

In some other embodiments, as shown in FIG. 8, two ends of the main body portion 211 are beyond two corresponding ends of the thermal management component 30 along the second direction Y1, respectively; or as shown in FIG. 9, two ends of the thermal management component 30 are beyond two corresponding ends of the main body portion 211 along the second direction Y1, respectively.

Two ends of the main body portion 211 being beyond two corresponding ends of the thermal management component 30 along the second direction Y1, respectively can be understood to mean that two ends of the main body portion 211 along the second direction Y1 are both located outside the projection of the thermal management component 30 in the plane perpendicular to the first direction X1.

As shown in FIG. 8, in an embodiment in which the second direction Y1 is parallel to the width direction Y2 of the thermal management component, along the second direction Y1, the thermal management component 30 has a first end 31 and a second end 32 opposite to each other, and the main body portion 211 has a third end 2111 and a fourth end 2112 opposite to each other, where the third end 2111 corresponds to the first end 31 and the third end 2111 is beyond the first end 31, which means that the third end 2111 is located outside the projection of the thermal management component 30 in the plane perpendicular to the first direction X1, and the fourth end 2112 corresponds to the second end 32 and the fourth end 2112 is beyond the second end 32, which means that the fourth end 2112 is located outside the projection of the thermal management component 30 in the plane perpendicular to the first direction X1.

If two ends of the main body portion 211 along the second direction Y1 are beyond two ends of the thermal management component 30, respectively, this can enable neither of the two ends of the thermal management component 30 along the second direction Y1 to be beyond the battery cell 20, thereby further reducing the risk of the thermal management component 30 interfering with other structural positions of the battery 100 along the second direction Y1, thus reserving sufficient space for the provision of the other structures of the battery cell 100.

As shown in FIG. 9, two ends of the thermal management component 30 being beyond two corresponding ends of the main body portion 211 along the second direction Y1, respectively can be understood to mean that the two ends of the thermal management component 30 along the second direction Y1 are both located outside of the projection of the main body portion 211 in the plane perpendicular to the first direction X1. As shown in FIG. 9, in an embodiment in which the second direction Y1 is parallel to the width direction Y2 of the thermal management component, along the second direction Y1, the thermal management component 30 has a first end 31 and a second end 32 opposite to each other, and the main body portion 211 has a third end 2111 and a fourth end 2112 opposite to each other, where the third end 2111 corresponds to the first end 31 and the first end 31 is beyond the third end 2111, which means that the first end 31 is located outside the projection of the main body portion 211 in the plane perpendicular to the first direction X1, and the second end 32 corresponds to the fourth end 2112 and the second end 32 is beyond the fourth end 2112, which means that the second end 32 is located outside the projection of the main body portion 211 in the plane perpendicular to the first direction X1.

If two ends of the thermal management component 30 along the second direction Y1 are beyond two corresponding ends of the main body portion 211, respectively, both portions of the thermal management component 30 that are beyond the main body portion 211 along the second direction Y1 are capable of exchanging heat with regions other than the main body portion 211, thus increasing the area of heat exchange between the battery cell 20 and the thermal management component 30, thereby further improving the efficiency of temperature regulation of the battery cell 20 by the thermal management component 30.

In embodiments in which at least one end of the main body portion 211 is beyond one end of the thermal management component 30 along the second direction Y1, two ends of the thermal management component 30 may be beyond two ends of the main body portion 211, respectively, along the third direction Z1, or two ends of the thermal management component 30 may be flush with two ends of the main body portion 211, respectively, along the third direction Z1; or two ends of the main body portion 211 are beyond two ends of the thermal management component 30 along the third direction Z1; or one end of the thermal management component 30 is flush with one end of the main body portion 211 along the third direction Z1, and the other end of the thermal management component 30 is beyond the other end of the main body portion 211; or one end of the thermal management component 30 is flush with one end of the main body portion 211 along the third direction Z1, and the other end of the main body portion 211 is beyond the other end of the thermal management component 30. Any two of the first direction X1, the second direction Y1, and the third direction Z1 are perpendicular to each other. FIGS. 8 and 9 illustrate situations in which two ends of the thermal management component 30 along the third direction Z1 are both beyond two ends of the main body portion 211 along the third direction Z1.

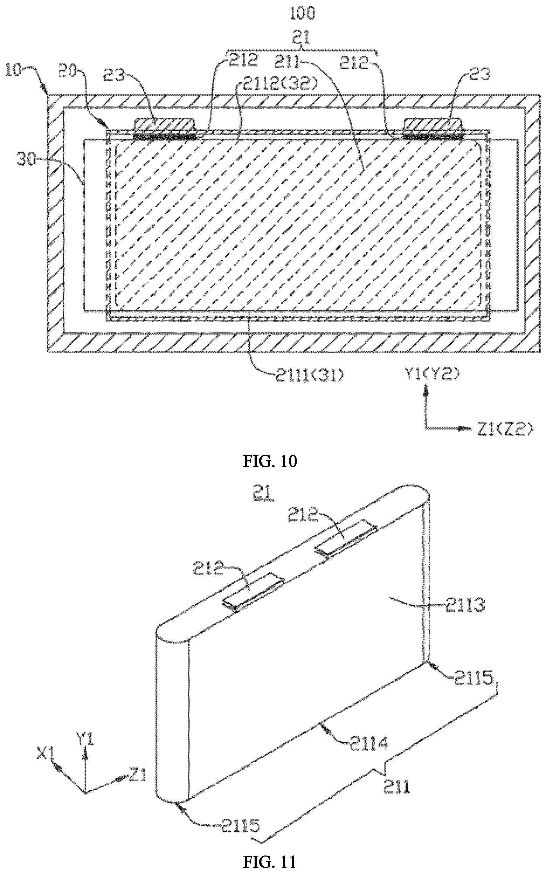

As shown in FIGS. 7 and 10, in some embodiments, at least one end of the main body portion 211 is flush with a corresponding end of the thermal management component 30 along the second direction Y1.

It can be understood that along the second direction Y1, at least one end of the main body portion 211 is not beyond one end of the thermal management component 30 and the end of the thermal management component 30 is not beyond the end of the main body portion 211.

At least one end of the main body portion 211 is flush with an end of the thermal management component 30, which enables the area of the overlapping portion of the projection of the thermal management component 30 with the main body portion 211 in the plane perpendicular to the first direction X1 to be as large as possible, so that the thermal management component 30 has a large effective area of thermal management for the battery cell 20, thus improving the efficiency of temperature regulation of the battery cell 20, thereby contributing to improving the service life of the battery cell 20.

Among other things, along the second direction Y1, the main body portion 211 may have only one end flush with one end of the thermal management component 30. As shown in FIG. 7, in an embodiment in which the second direction Y1 is parallel to the width direction Y2 of the thermal management component, along the second direction Y1, the thermal management component 30 has a first end 31 and a second end 32 opposite to each other, and the main body portion 211 has a third end 2111 and a fourth end 2112 opposite to each other, where the first end 31 corresponds to the third end 2111 and the first end 31 is flush with the third end 2111, and the fourth end 2112 is beyond the second end 32, which means that the fourth end 2112 is located outside the projection of the thermal management component 30 in the plane perpendicular to the first direction X1. The dashed portion of the main body portion 211 in FIG. 7 indicates a region of the main body portion 211 that is obscured by the thermal management component 30. In other words, the dashed portion of the main body portion 211 indicates a portion of the thermal management component 30 that overlaps the main body portion 211. The fourth end 2112 may be an end of the tab 212 that protrudes from the main body portion 211, and the fourth end 2112 is beyond the second end 32, which can reduce interference of other structures electrically connected to the tab 212 with the thermal management component 30.

Of course, the first end 31 may also be flush with the third end 2111 and the second end 32 be beyond the fourth end 2112, which means that the second end 32 is located outside the projection of the main body portion 211 in the plane perpendicular to the first direction X1.

As shown in 10, in some other embodiments, along the second direction Y1, the ends of the main body portion 211 are flush with two ends of the thermal management component 30, respectively.

In embodiments in which the second direction Y1 is parallel to the width direction Y2 of the thermal management component, along the second direction Y1, the thermal management component 30 has a first end 31 and a second end 32 opposite to each other, and the main body portion 211 has a third end 2111 and a fourth end 2112 opposite to each other, where the first end 31 corresponds to the third end 2111 and the first end 31 is flush with the third end 2111, and the second end 32 corresponds to the fourth end 2112 and the fourth end 2112 is flush with the second end 32.

Along the second direction Y1, two ends of the main body portion 211 are flush with two ends of the thermal management component 30, respectively, so that the thermal management component 30 has a large effective area of thermal management for the battery cell 20, thus improving the efficiency of temperature regulation of the battery cell 20, thereby contributing to improving the service life of the battery cell 20.

In embodiments in which at least one end of the main body portion 211 is flush with one end of the thermal management component 30 along the second direction Y1, two ends of the thermal management component 30 may be beyond two ends of the main body portion 211, respectively, along the third direction Z1, or two ends of the thermal management component 30 may be flush with two ends of the main body portion 211, respectively, along the third direction Z1; or two ends of the main body portion 211 are beyond two ends of the thermal management component 30 along the third direction Z1; or one end of the thermal management component 30 is flush with one end of the main body portion 211 along the third direction Z1, and the other end of the thermal management component 30 is beyond the other end of the main body portion 211; or one end of the thermal management component 30 is flush with one end of the main body portion 211 along the third direction Z1, and the other end of the main body portion 211 is beyond the other end of the thermal management component 30. FIGS. 7 and 10 illustrate situations in which two ends of the thermal management component 30 along the third direction Z1 are both beyond two ends of the main body portion 211 along the third direction Z1.

In some embodiments, along the first direction X1, the main body portion 211 has a first surface 2113 facing the thermal management component 30, the first surface 2113 being a surface of the main body portion 211 that has the largest area.

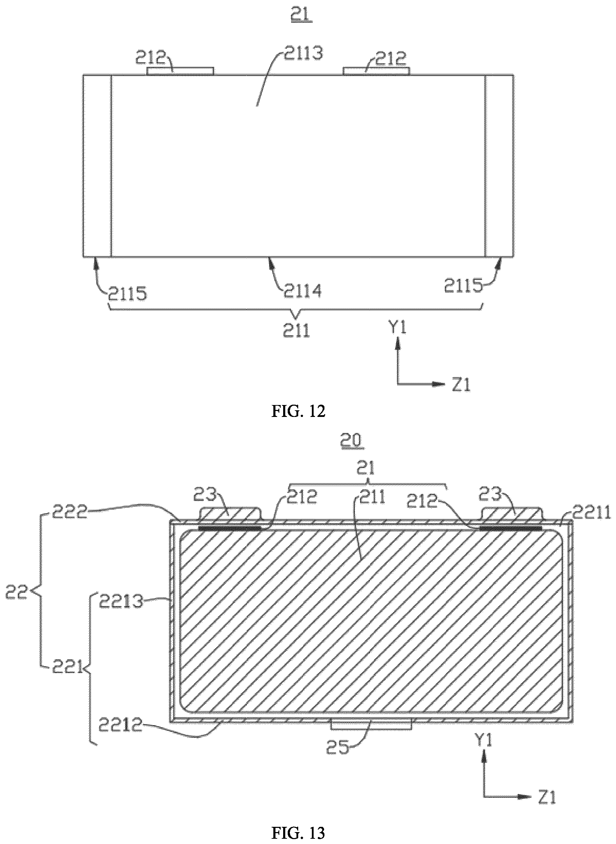

As shown in FIGS. 11 and 12, an example where the battery cell 20 is a square shell battery cell and the electrode assembly 21 is a rolled square electrode assembly 21 is illustrated. The main body portion 211 includes a flat portion 2114 and two bent portions 2115 connected to two ends of the flat portion 2114, and the first surfaces 2113 are two surfaces of the flat portion 2114 that are opposite to each other in the first direction X1. The area of the projection of the main body portion 211 on the plane perpendicular to the first direction X1 is S₁, which includes the area S₁₁ of the projection of the flat portion 2114 on the plane perpendicular to the first direction X1, and the area S₁₂ of the projection of each of the bent portions 2115 on the plane perpendicular to the first direction X1, i.e., S₁=S₁₁+2S₁₂.

The thermal management component 30 is provided opposite to the surface of the main body portion 211 that has the largest area, which can enable the thermal management component 30 to have a larger area for regulating the temperature of the battery cell 20, thus improving the efficiency of temperature regulation of the battery cell 20, thereby contributing to improving the service life of the battery cell 20.

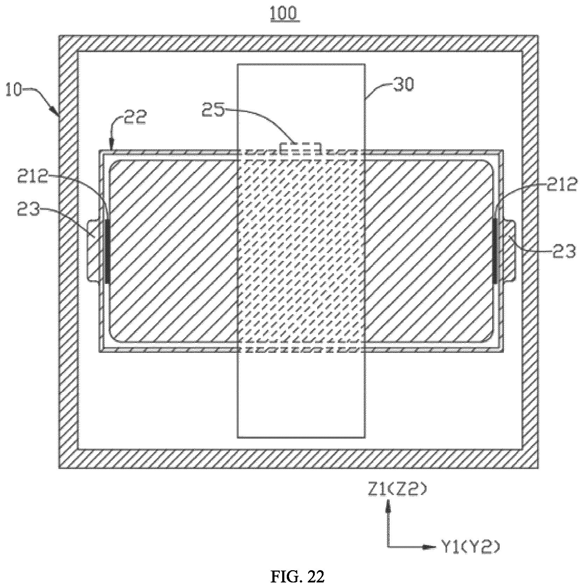

As shown in FIGS. 13-24, in some embodiments, the battery cell 20 further includes a shell 22, electrode terminals 23, and a pressure relief mechanism 25, where the shell 22 includes a plurality of wall portions, the plurality of wall portions together defining an accommodation space for accommodating the electrode assembly 21; the electrode terminals 23 are used for electrically connecting to the tabs 212; and the pressure relief mechanism 25 is used for relieving pressure inside the battery cell 20, the pressure relief mechanism 25 and the electrode terminals 23 being separately provided at different ones of the wall portions

The end cover 222 described previously is at least one of the plurality of wall portions. The remaining wall portions of the plurality of wall portions together form the case 221.

The electrode terminals 23 are used to electrically connect to the tabs 212 to form output electrodes of the battery cell 20. The electrode terminals 23 are provided in at least one of the wall portions. The electrode terminal 23 may be provided in the end cover 222.

The pressure relief mechanism 25 is used to relieve pressure inside the battery cell 20. For example, the pressure relief mechanism 25 is actuated to relieve the internal pressure of the battery cell 20 when the internal pressure or temperature of the battery cell reaches a predetermined threshold. The threshold design varies according to different design requirements. The threshold may depend on the material of one or more of the positive electrode plate, the negative electrode plate, the electrolyte, and the separator in the battery cell 20. The pressure relief mechanism 25 may take the form of, for example, an explosion-proof valve, an explosion-proof sheet, an air valve, a pressure relief valve, or a safety valve, and may specifically employ a pressure-sensitive or temperature-sensitive element or construction. That is to say, when the internal pressure or temperature of the battery cell 20 reaches a predetermined threshold, the pressure relief mechanism 25 performs an action, or a weak structure provided in the pressure relief mechanism 25 is broken, so as to form an opening 2211 or channel through which the internal pressure or temperature can be relieved.

In the case where the electrode terminal 23 is provided in the end cover 222, the pressure relief mechanism 25 may be provided in the case 221 so that the pressure relief mechanism 25 and the electrode terminal 23 are provided in two wall portions, respectively. Of course, the electrode terminal 23 may also be provided in the case 221 and the pressure relief mechanism 25 be provided in the end cover 222.

The voltage outputted from the battery 100 can be as high as hundreds or even thousands of volts. The high-temperature fumes discharged from the battery cell 20 undergoing thermal runaway are highly susceptible to triggering high-voltage arcing as they pass through the region of the high-voltage electrical components, resulting in rapid thermal spreading throughout the battery 100.

The pressure relief mechanism 25 and the electrode terminals 23 are separately provided at different wall portions, so that when thermal runaway occurs in the battery cell 20, the distance between the discharged fumes and the high-voltage busbar component can be effectively increased, thereby effectively reducing the risk of the occurrence of high-voltage arcing.

As shown in FIGS. 13-15, in some embodiments, the pressure relief mechanism 25 and the electrode terminals 23 are provided in two wall portions arranged opposite to each other along the second direction Y1, respectively.

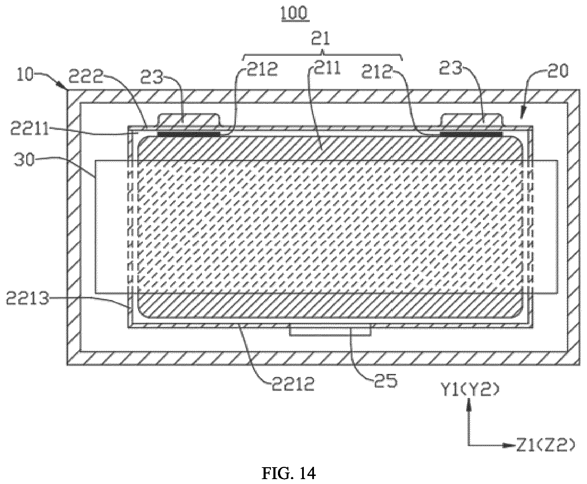

As shown in FIGS. 13 and 14, the plurality of wall portions forming the case 221 include a bottom wall 2212 and a side wall 2213, where along the second direction Y1, one end of the side wall 2213 is disposed around an outer periphery of the bottom wall 2212 and the other end of the side wall 2213 forms an opening 2211 in the case 221, and the opening 2211 and the bottom wall 2212 are arranged opposite to each other. FIG. 13 illustrates the opposite arrangement of the opening 2211 and the bottom wall 2212 in the second direction Y1. The electrode terminals 23 are provided in the end cover 222 and the pressure relief mechanism 25 is provided in the bottom wall 2212 of the case 221. When the battery cell 20 is accommodated within the box body 10, the electrode terminals 23 may face upward, downward, or in other directions. One of the electrode terminals 23 and the pressure relief mechanism 25 being provided in the case 221 and the other being provided in the end cover 222 can enable both the end cover 222 and the case 221 to have good structural strength, which alleviates the problem of reduced structural strength of the case 221 or the end cover 222 caused by providing the pressure relief mechanism 25 and the electrode terminals 23 at the same time on the case 221 or the end cover 222.

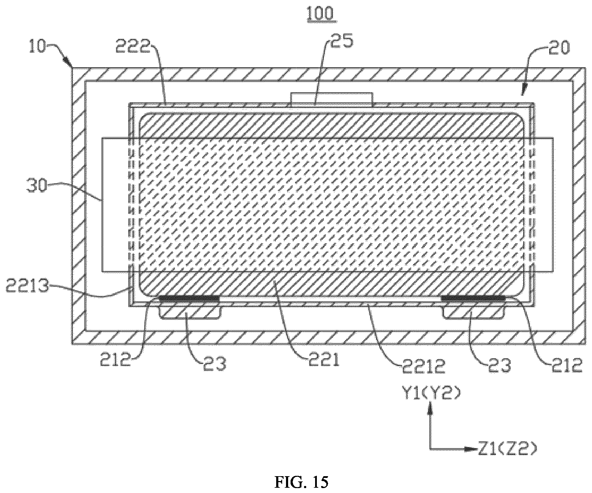

As shown in FIG. 15, the plurality of wall portions forming the case 221 include a bottom wall 2212 and a side wall 2213, where along the second direction Y1, one end of the side wall 2213 is disposed around the outer periphery of the bottom wall 2212 and the other end of the side wall 2213 forms an opening 2211 of the case 221. The electrode terminals 23 are provided in the bottom wall 2212 of the case 221, and the pressure relief mechanism 25 is provided in the end cover 222. One of the electrode terminals 23 and the pressure relief mechanism 25 being provided in the case 221 and the other being provided in the end cover 222 can enable both the end cover 222 and the case 221 to have good structural strength, which alleviates the problem of reduced structural strength of the case 221 or the end cover 222 caused by providing the pressure relief mechanism 25 and the electrode terminals 23 at the same time on the case 221 or the end cover 222.

Of course, in some other embodiments, the electrode terminals 23 and the pressure relief mechanism 25 may also be provided on two opposite side walls 2213 of the case 221, respectively, and then both the electrode terminals 23 and the pressure relief mechanism 25 are integrated on the case 221, which facilitates machining and manufacturing.

The pressure relief mechanism 25 and the electrode terminals 23 being provided on two wall portions arranged opposite to each other along the second direction Y1, respectively, not only facilitates the arrangement, but also enables the discharged fumes to be far from the high-voltage busbar component when thermal runaway occurs in the battery cell 20, thereby effectively reducing the risk of the occurrence of high-voltage arcing.

In some other embodiments, the pressure relief mechanism 25 and the electrode terminals 23 are provided on two wall portions arranged in an intersecting manner, respectively. Two intersecting wall portions are two wall portions that are not parallel. For example, the side wall 2213 and the end cover 222 intersect, and two adjacent portions of the side wall 2213 intersect.

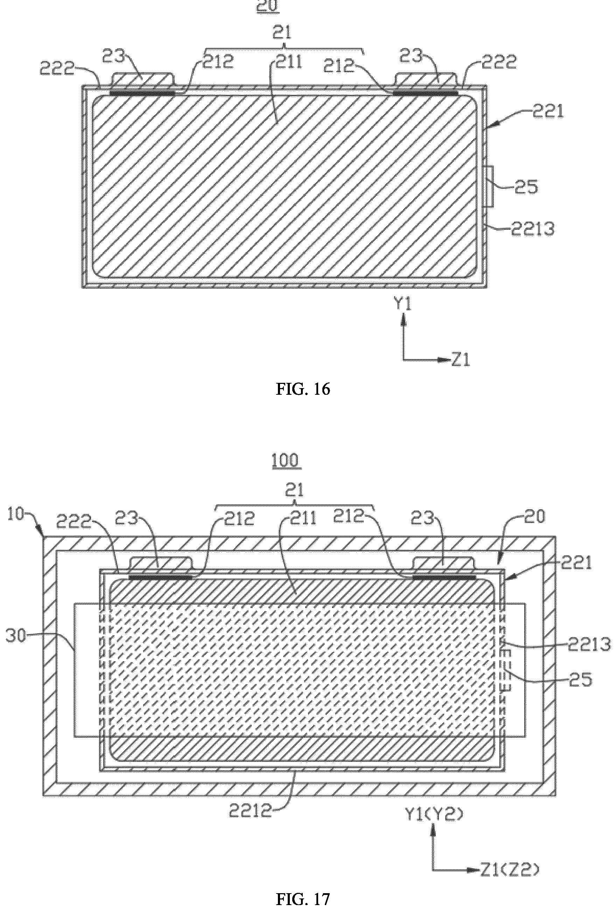

As shown in FIGS. 16 and 17, the electrode terminals 23 are provided in the end cover 222 and the pressure relief mechanism 25 is provided in the side wall 2213 of the case 221. One of the electrode terminals 23 and the pressure relief mechanism 25 being provided in the case 221 and the other being provided in the end cover 222 can enable both the end cover 222 and the case 221 to have good structural strength, which alleviates the problem of reduced structural strength of the case 221 or the end cover 222 caused by providing the pressure relief mechanism 25 and the electrode terminals 23 at the same time on the case 221 or the end cover 222.

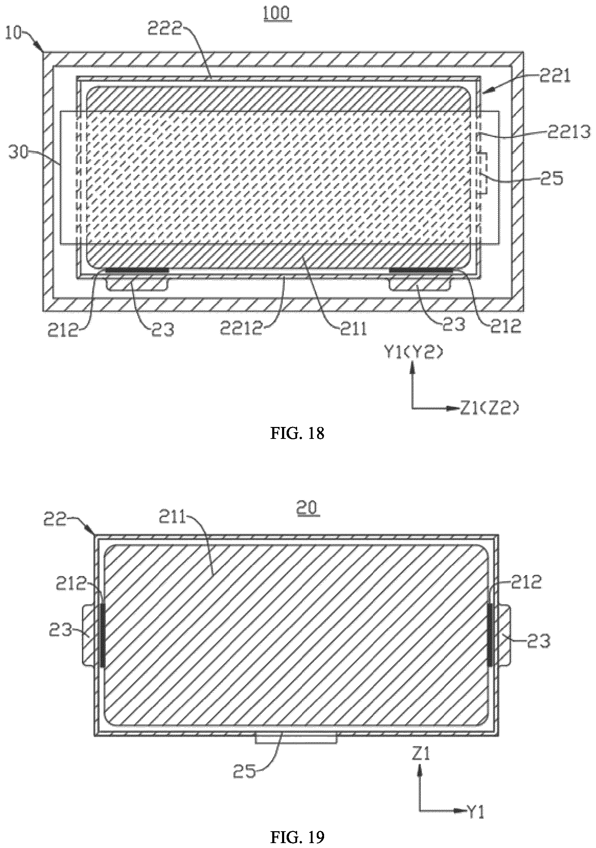

As shown in FIG. 18, the pressure relief mechanism 25 is provided on the side wall 2213 of the case 221, and the electrode terminals 23 are provided on the bottom wall 2212 of the case 221.

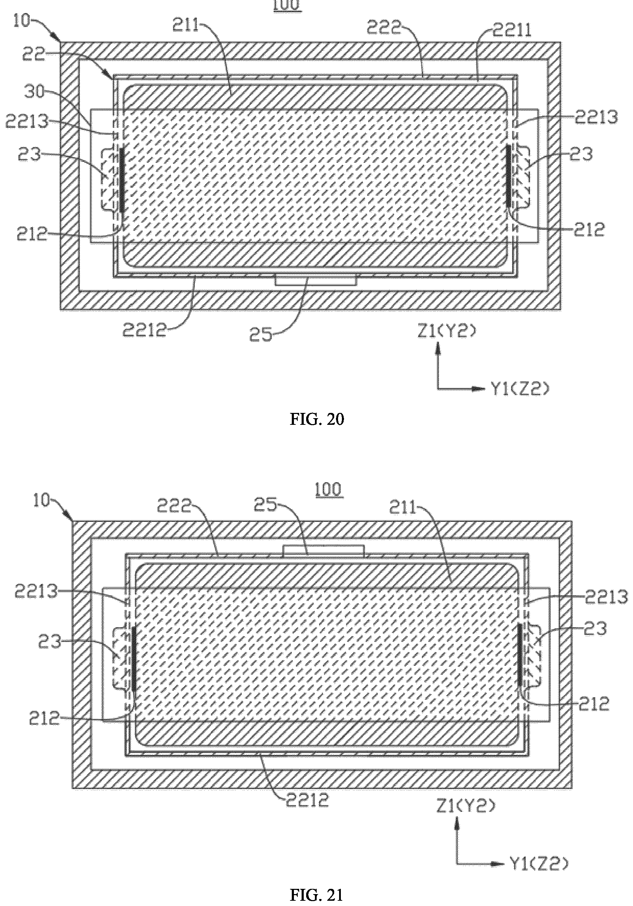

As shown in FIGS. 19 and 20, the electrode terminals 23 may be provided on the side wall 2213 of the case 221, and the pressure relief mechanism 25 be provided on the bottom wall 2212 of the case 221.

As shown in FIG. 18, in some embodiments, the electrode assembly 21 includes two tabs 212 of opposite polarities, the two tabs 212 being provided at the same end of the main body portion 211 along the second direction Y1.

One of the two tabs 212 is a positive tab and the other is a negative tab. The two tabs 212 protrude from the main body portion 211 at the same end of the main body portion 211 along the second direction Y1.

The two tabs 212 are provided at the same end of the main body portion 211, then when assembling the battery cell 20, the two tabs 212 can be separately connected at the same end of the main body portion 211 to other structures, which makes it more convenient to assemble the battery cell 20, thereby contributing to the improvement of the assembly efficiency.

As shown in FIGS. 19-22, in some other embodiments, the electrode assembly 21 includes two tabs 212 of opposite polarities, the two polar ears 212 being provided at two opposite ends of the main body portion 211 along the second direction Y1, respectively.

The two tabs 212 are provided at two opposite ends of the main body portion 211, respectively, which can reduce the risk of short-circuiting of the battery cell 20, thereby reducing the risk of the two tabs 212 interfering with each other when they are separately connected to other structures.

The battery cell 20 may include only one electrode terminal 23, then one of the two tabs 212 is electrically connected to the electrode terminal 23, and the other of the two tabs 212 is electrically connected to the shell 22.

As shown in FIGS. 17, 18, 19, 20, 21, and 22, in some embodiments, the battery cell 20 further includes two electrode terminals 23, the two electrode terminals 23 being used to electrically connect to the two tabs 212, respectively.

The two electrode terminals 23 may be provided on the same wall portion of the shell 22, for example, both electrode terminals 23 are provided on the end cover 222 (as shown in FIG. 17); or both electrode terminals 23 are provided on the same side wall 2213 of the case 221; or both electrode terminals 23 are provided on the bottom wall 2212 of the case 221 (as shown in FIG. 18).

The two electrode terminals 23 may also be provided on two wall portions of the shell 22, respectively, for example one of the two electrode terminals 23 is provided on the end cover 222 and the other is provided on the case 221; or the two electrode terminals 23 are on two opposite side walls 2213 of the case 221, respectively (as shown in FIGS. 19, 20, 21, and 22); or one of the two electrode terminals 23 is provided on the side wall 2213 of the case 221, and the other is provided on the bottom wall 2212 of the case 221.

The two electrode terminals 23 are electrically connected to the two tabs 212, respectively, which can reduce the risk of short-circuiting of the battery cell 20.

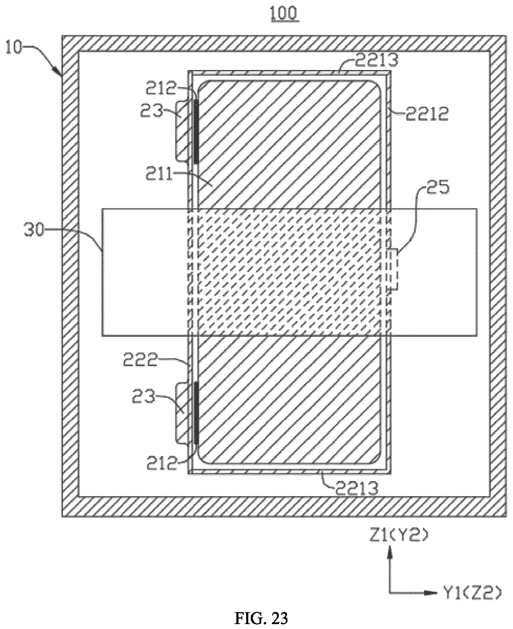

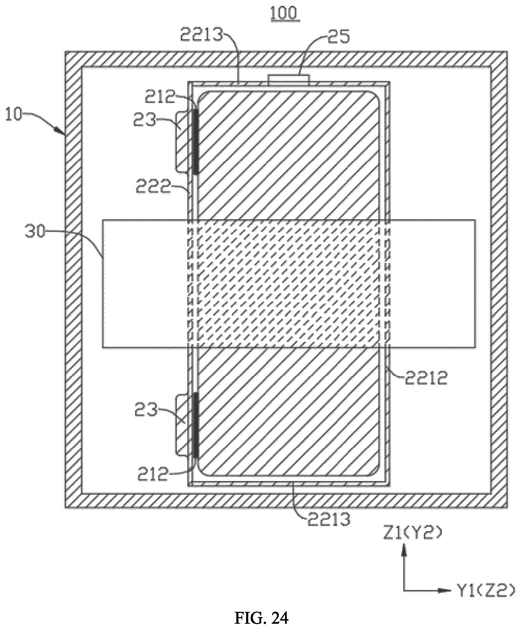

As shown in FIGS. 23 and 24, in some embodiments, the second direction Y1 may be parallel to the length direction Z2 of the thermal management component.

As shown in FIGS. 23 and 24, two tabs 212 of opposite polarities protrude from the main body portion 211 at the same end of the main body portion 211 along the second direction Y1, and both electrode terminals 23 are provided on a wall portion of the shell 22 that is opposite to the two tabs 212. In FIG. 23, the wall portion of the shell 22 that is opposite to the tabs 212 is the end cover 222, and both electrode terminals 23 are provided on the end cover 222, the pressure relief mechanism 25 is provided opposite to the electrode terminals 23, and the pressure relief mechanism 25 is provided on the bottom wall 2212 of the case 221. In FIG. 24, the wall portion of the shell 22 that is opposite to the tabs 212 is the end cover 222, and both electrode terminals 23 are provided on the end cover 222, and the pressure relief mechanism 25 is provided on the side wall 2213 of the case 221. This facilitates the electrical connection of the electrode terminals 23 and the tabs 212, and can enable any wall portion of the case 221 to have good structural strength.

In some embodiments, the projection of the tabs 212 in the plane perpendicular to the first direction X1 and the projection of the thermal management component 30 adjacent to the main body portion 211 in the plane perpendicular to the first direction X1 are at least partially overlapping.

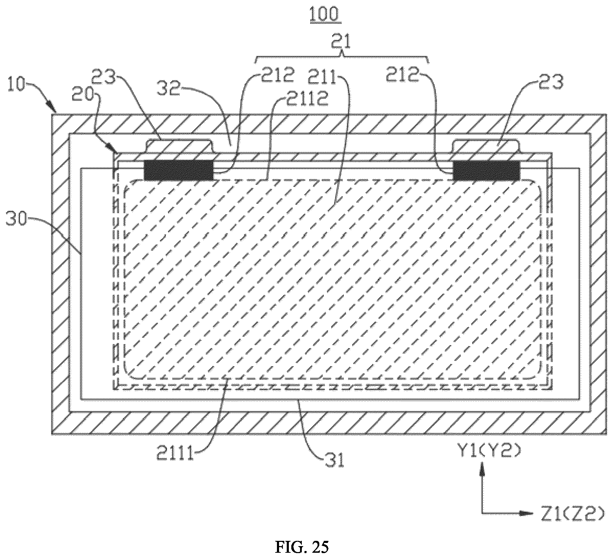

In embodiments in which the two tabs 212 of opposite polarities are both located at the same end of the main body portion 211, as shown in FIG. 25, the projection of each of the tabs 212 in the plane perpendicular to the first direction X1 and the projection of the thermal management component 30 adjacent to the main body portion 211 in the plane perpendicular to the first direction X1 may be only partially overlapping; or as shown in FIG. 9, the projection of each of the tabs 212 in the plane perpendicular to the first direction X1 is located entirely within the projection of the thermal management component 30 adjacent to the main body portion 211 in the plane perpendicular to the first direction X1.

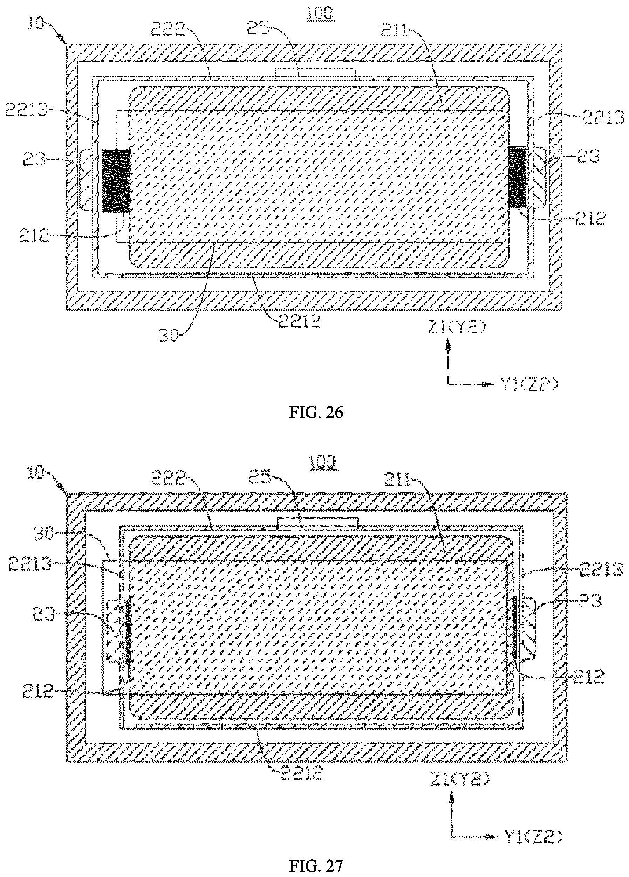

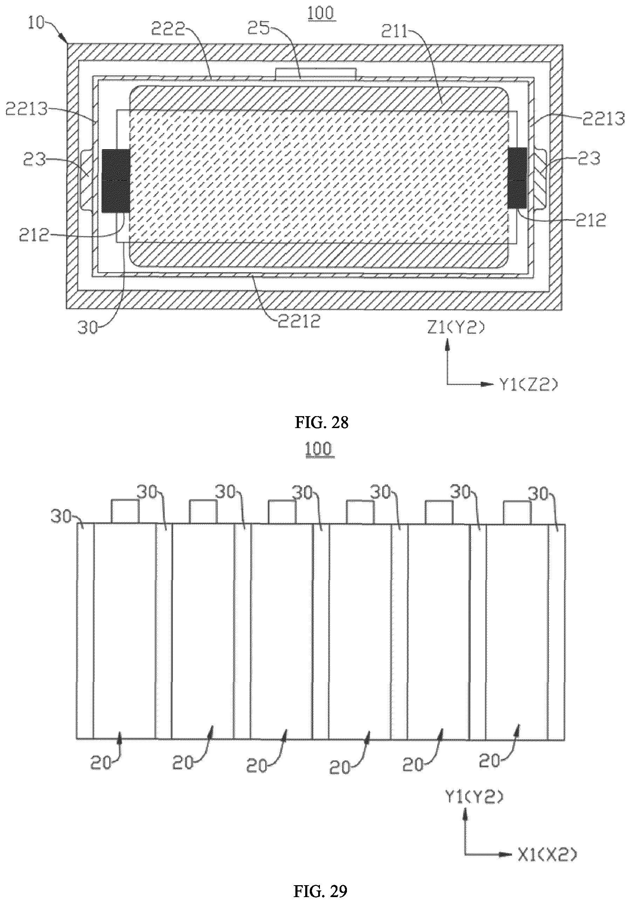

In embodiments in which the two tabs 212 of opposite polarities are located at two opposite ends of the main body portion 211, respectively, as shown in FIG. 26, the projection of one of the tabs 212 in the plane perpendicular to the first direction X1 and the projection of the thermal management component 30 adjacent to the main body portion 211 in the plane perpendicular to the first direction X1 may be only partially overlapping, and the projection of the other tab 212 in the plane perpendicular to the first direction X1 and the projection of the thermal management component 30 adjacent to the main body portion 211 in the plane perpendicular to the first direction X1 are completely non-overlapping; or as shown in FIG. 27, the projection of one of the tabs 212 in the plane perpendicular to the first direction X1 is located entirely within the projection of the thermal management component 30 adjacent to the main body portion 211 in the plane perpendicular to the first direction X1, and the projection of the other tab 212 in the plane perpendicular to the first direction X1 and the projection of the thermal management component 30 adjacent to the main body portion 211 in the plane perpendicular to the first direction X1 are completely non-overlapping; or as shown in FIG. 28, the projection of each of the tabs 212 in the plane perpendicular to the first direction X1 and the projection of the thermal management component 30 adjacent to the main body portion 211 in the plane perpendicular to the first direction X1 are only partially overlapping; or as shown in FIG. 21, the projection of each of the tabs 212 in the plane perpendicular to the first direction X1 is located entirely within the projection of the thermal management component 30 adjacent to the main body portion 211 in the plane perpendicular to the first direction X1.

Since the temperature of the tabs 212 is high during the charging and discharging process of the battery cell 20, and the projection of the tabs in the plane perpendicular to the first direction X1 and the projection of the thermal management component 30 adjacent to the main body portion 211 in the plane perpendicular to the first direction X1 are at least partially overlapping, the thermal management component 30 is capable of exchanging heat with the tabs 212 to carry away the heat at the tabs 212, thereby reducing the risk of thermal runaway of the battery cell 20.

In some embodiments, as shown in FIG. 29, the thermal management component 30 is provided between at least two adjacent ones of the battery cells 20 along the first direction X1.

Along the first direction X1, the thermal management component 30 may be provided between every two adjacent battery cells 20, or the thermal management component 30 may be provided between some adjacent ones of the battery cells 20 and the thermal management component 30 may not be provided between some other adjacent ones of the battery cells 20. FIG. 29 illustrates a situation where the thermal management component 30 is provided between every two adjacent ones of the battery cells 20.

Two battery cells 20 adjacent to each other along the first direction X1 are provided with a thermal management component 30, then the thermal management component 30 is capable of exchanging heat with the battery cells 20 on both sides at the same time, which enables improvement of the efficiency of heat exchange, thereby improving the capability of temperature regulation of the battery cells 20 by the thermal management component 30. A thermal management component 30 is provided between two adjacent battery cells 20, so that in the event that thermal runaway occurs in one of them, the thermal management component 30 can act as a thermal insulation layer to reduce the amount of heat transferred from the battery cell 20 in which thermal runaway occurs to the adjacent battery cells 20, thereby delaying the occurrence of thermal diffusion. Since the thermal management component 30 can play the roles of thermal management and of the thermal insulation layer at the same time, it is capable of improving the space utilization rate of the battery 100, which in turn improves the energy density of the battery 100.

In some embodiments, there is a plurality of thermal management components 30 provided, the plurality of thermal management components 30 being provided spaced apart along the first direction X1, with at least one said battery cell 20 being provided between two adjacent ones of the thermal management components 30.

A plurality is defined as two or more. There may be only one battery cell 20 provided between two adjacent thermal management components 30, or there may be a plurality of battery cells 20 provided. The same number of battery cells 20 may be provided between every two adjacent thermal management components 30, or a different number of battery cells 20 may be provided. FIG. 29 illustrates the situation where one battery cell 20 is provided between any two adjacent thermal management components 30.

A plurality of thermal management components 30 work together to regulate the temperature of the battery cells 20, which enables improvement of the efficiency of temperature regulation, so as to enable normal operation of the battery cells 20 and reduce the risk of thermal runaway of the battery cells 20. At least one battery cell 20 is provided between two adjacent thermal management components 30, which enables a delay in the occurrence of thermal diffusion from two sides of the battery cell 20 along the first direction X1.

With continued reference to FIG. 29, the battery cells 20 are arranged alternately with the thermal management components 30 along the first direction X1, so that for each battery cell 20, there is at least one thermal management component 30 provided opposite thereto, and the temperature thereof is regulated by this thermal management component 30, which is conducive to reducing the temperature difference between the various battery cells 20 in the battery 100, so as to provide a more even distribution of the temperature inside the battery 100, thereby contributing to the realization of normal charging and discharging of the battery 100.

Embodiments of the present application further provide an electrical device, the electrical device including the battery 100 provided in any one of the above embodiments.

The battery 100 provides electrical energy to the electrical device so that the electrical device can properly perform its functions.

Embodiments of the present application provide a battery 100, the battery 100 including a plurality of battery cells 20 stacked along a first direction X1, where a thermal management component 30 is provided between two adjacent battery cells 20 along the first direction X1. Each battery cell 20 includes a shell 22, an electrode assembly 21, two electrode terminals 23, and a pressure relief mechanism 25, where the electrode assembly 21 includes a main body portion 211 and two tabs 212 protruding from the main body portion 211 along the second direction Y1 and having opposite polarities, and the two electrode terminals 23 are electrically connected to the two tabs 212 through a current collecting member 24, respectively. The electrode terminals 23 and the pressure relief mechanism 25 are provided on two wall portions of the shell 22, respectively. Preferably, the electrode terminals 23 and the pressure relief mechanism 25 are provided on two opposite wall portions of the shell 22, respectively.

The projection of the main body portion 211 in a plane perpendicular to the first direction X1 and the projection of the thermal management component 30 adjacent to the main body portion 211 in the plane perpendicular to the first direction X1 are partially overlapping. The area of the projection of the main body portion 211 in the plane perpendicular to the first direction X1 is S1, and the area of the overlapping portion of the projection of the main body portion 211 in the plane perpendicular to the first direction X1 and the projection of the thermal management component 30 adjacent to the main body portion 211 in the plane perpendicular to the first direction X1 is S2, which meet 0.05 ≤ S2/S1 ≤ 1, preferably 0.25 ≤ S2/S1 ≤ 1.

The above are only preferred examples of the present application, and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery, comprising:
a plurality of battery cells arranged in a stacked manner along a first direction, wherein each of the battery cells comprises an electrode assembly, the electrode assembly comprising a main body portion and a tab protruding from the main body portion along a second direction, with the second direction being perpendicular to the first direction; and
a thermal management component provided opposite to the battery cells along the first direction, the thermal management component being configured to regulate the temperature of the battery cells;
wherein the projection of the main body portion in a plane perpendicular to the first direction and the projection of the thermal management component adjacent to the main body portion in the plane perpendicular to the first direction are at least partially overlapping.

2. The battery according to claim 1, wherein the area of the projection of the main body portion in the plane perpendicular to the first direction is S₁, and the area of an overlapping portion of the projection of the main body portion in the plane perpendicular to the first direction and the projection of the thermal management component adjacent to the main body portion in the plane perpendicular to the first direction is S₂, which meet: 0.05≤S₂/S1≤1.

3. The battery according to claim 2, wherein 0.25≤S₂/S₁≤1.

4. The battery according to any one of claims 1-3, wherein along the second direction, at least one end of the main body portion is beyond a corresponding end of the thermal management component; or along the second direction, at least one end of the thermal management component is beyond a corresponding end of the main body portion.

5. The battery according to claim 4, wherein along the second direction, two ends of the main body portion are beyond two corresponding ends of the thermal management component, respectively; or along the second direction, two ends of the thermal management component are beyond two corresponding ends of the main body portion, respectively.

6. The battery according to any one of claims 1-3, wherein along the second direction, at least one end of the main body portion is flush with a corresponding end of the thermal management component.

7. The battery according to claim 6, wherein along the second direction, two ends of the main body portion are flush with two corresponding ends of the thermal management component, respectively.

8. The battery according to any one of claims 1-7, wherein along the first direction, the main body portion has a first surface facing the thermal management component, the first surface being a surface of the main body portion that has the largest area.

9. The battery according to any one of claims 1-8, wherein the battery cell further comprises:
a shell comprising a plurality of wall portions, the plurality of wall portions together defining an accommodation space for accommodating the electrode assembly;
an electrode terminal for electrically connecting to the tab; and
a pressure relief mechanism for relieving pressure inside the battery cell, the pressure relief mechanism and the electrode terminal being separately provided at different ones of the wall portions.

10. The battery according to claim 9, wherein the pressure relief mechanism and the electrode terminal are provided on two of the wall portions arranged opposite each other along the second direction, respectively; or the pressure relief mechanism and the electrode terminal are provided on two of the wall portions arranged intersecting each other, respectively.

11. The battery according to any one of claims 1-10, wherein the electrode assembly comprises the two tabs of opposite polarities, the two tabs being provided on the same end of the main body portion along the second direction.

12. The battery according to any one of claims 1-10, wherein the electrode assembly comprises the two tabs of opposite polarities, the two tabs being provided on two opposite ends of the main body portion along the second direction, respectively.

13. The battery according to any one of claims 1-12, wherein the projection of the tab in the plane perpendicular to the first direction and the projection of the thermal management component adjacent to the main body portion in the plane perpendicular to the first direction are at least partially overlapping.

14. The battery according to any one of claims 1-13, wherein the thermal management component is provided between the at least two adjacent ones of the battery cells along the first direction.

15. The battery according to any one of claims 1-14, wherein a plurality of said thermal management components are provided, the plurality of said thermal management components being provided spaced apart along the first direction, with at least one said battery cell being provided between the two adjacent ones of the thermal management components.

16. The battery according to claim 15, wherein the battery cells are arranged alternately with the thermal management components along the first direction.

17. An electrical device, comprising a battery according to any one of claims 1-16.
